# EUROPÄISCHE PATENTSCHRIFT

(11) **EP 1 767 081 B1**
(45) Veröffentlichungstag und Bekanntmachung des Hinweises auf die Patenterteilung: **03.03.2010**
(21) Anmeldenummer: 04024119.2
(22) Anmeldetag: 09.10.2004
(51) Int. Cl.: A01C 15/00, A01C 17/00, A01D 75/20

(54) **Verriegelungseinrichtung für eine Schutzeinrichtung**
Locking device for a protective device
Dispositif de verrouillage pour un dispositif de protection

(30) Priorität: 16.10.2003 DE 10348067
(43) Veröffentlichungstag der Anmeldung: 28.03.2007
(73) Patentinhaber: Amazonen-Werke H. Dreyer GmbH & Co. KG, 49205 Hasbergen (DE)
(72) Erfinder: Walter, Achim, 49078 Osnabrück (DE); Krabbe, Ullrich, 49205 Hasbergen (DE)

(56) Entgegenhaltungen:
- EP-A- 0 857 409
- DE-A1- 19 948 500

## Beschreibung

Die Erfindung betrifft eine landwirtschaftliche Maschine mit einer Schutzeinrichtung. Mittels Verriegelungselemente werden Schutzeinrichtungen in ihrer Schutzstellung, in welcher sie den Zugang zu bewegbaren Teilen einer Maschine verhindert, verriegelt.

Derartige Verriegelungselemente sind in vielfacher Weise bekannt. Ein bekanntes Verriegelungselement ist als einfache Sperrklinke ausgebildet und kann gegen Schwerkraft oder Federkraft in eine Entriegelungsstellung zurückgezogen werden, so dass die Schutzeinrichtung weggeschwenkt oder abgenommen werden kann.

Durch die DE 698 01 242 T2 ist eine Schutzeinrichtung für einen Düngerstreuer bekannt, die die Rückseite des Düngerstreuer umgibt und verhindert, dass die Streuelemente in unerwünschter Weise berührt werden. Wenn diese Schutzeinrichtung wegbewegt wird, gibt eine Warneinrichtung ein Signal ab.

Der Erfindung liegt die Aufgabe zugrunde, ein einfach ausgebildetes, leicht, jedoch nicht unbeabsichtigt zu betätigendes und sicher verriegelndes Verriegelungselement zu schaffen.

Diese Aufgabe wird erfindungsgemäß durch die Merkmale des Patentanspruches 1 gelöst. Infolge dieser Maßnahmen hält das Verriegelungselement die Schutzeinrichtung sicher in der Schutzposition. Die Rastnase kann nur mittels eines gesonderten Betätigungselementes in Entriegelungsstellung bewegt werden, so dass dann die Schutzeinrichtung weggenommen oder bewegt werden kann. Eine derartige Ausgestaltung des Verriegelungselementes setzt voraus, dass das Verriegelungselement nicht ungewollt in die Entriegelungsstellung gebracht wird, um die Schutzeinrichtung wegzuschwenken und so den Zugang zu dem bewegbaren Teil zu ermöglichen. Vielmehr muss bei der erfindungsgemäßen Ausgestaltung des Verriegelungselementes der Bediener der Maschine ganz bewusst das nicht an dem Verriegelungselement angeordnete Betätigungselement mit dem Verriegelungselement in Wirkverbindung bringen, um das Verriegelungselement in Entriegelungsstellung zu bringen, da die Rastnase bei dem erfindungsgemäßen Verriegelungselement nur mittels des Betätigungselementes, welches mit dem Verriegelungselement in Wirkverbindung gebracht wurde, zum Zwecke der Entriegelung, entriegelt werden.

Durch die erfindungsgemäße Maßnahme ist, das Verriegelungselement nur in ganz bewusster Weise von dem Bediener in Entriegelungsstellung bringen, weil die Rastnase eine Aussparung aufweist, in welche das Betätigungselement einsteckbar ist. Der Bediener der Maschine muss also, wenn er die Schutzeinrichtung wegschwenken will, um einen Zugang zu den bewegbaren Teilen der Maschine zu erhalten, zum Zwecke der Entriegelung des Verriegelungselementes das Betätigungselement bewusst in die Aussparung stecken, um die Rastnase zum Zwecke des Verriegelungselementes aus der Aussparung des Rastanschlages herauszubewegen, entriegeln.

Eine einfache Ausgestaltung des Verriegelungselementes lässt sich dadurch erreichen, dass das Verriegelungselement aus einem elastischen Werkstoff besteht und aufgrund der Eigenelastizität des Werkstoffes die Rastnase gegenüber dem Rastanschlag durch das Betätigungselement bewegbar ist.

Eine einfache Ausgestaltung des Verriegelungselementes lässt sich dadurch erreichen, dass der Rastanschlag eine Aussparung aufweist, in welche die Rastnase hineinragt.

Um in einfacher Weise nach dem Entriegeln des Verriegelungselementes die Schutzeinrichtung wegschwenken zu können, ist vorgesehen, dass das Verriegelungselement einen Handgriff aufweist, und dass die Rastnase an dem Handgriff angeordnet ist. Hierdurch ergibt sich eine einfache Ausgestaltung und Anordnung des Verriegelungselementes.

Um das Verriegelungselement mit einer Hand entriegeln zu können, und gleichzeitig die Sicherheitseinrichtung aus der Schutzposition wegschwenken zu können, um dem Zugang zu den drehbaren Teilen zu ermöglichen, ist vorgesehen, dass die Aussparung für das Betätigungselement derart angeordnet ist, dass das Betätigungselement in Entriegelungsstellung der Rastnase sich im Bereich des Handgriffes und in Verriegelungsstellung der Randnase sich dass das Betätigungselement im Abstand zu dem Handgriff befindet.

Für eine einfache Ausgestaltung, die gleichzeitig eine Verriegelung und Entriegelung des Verriegelungselementes in preiswerter Ausgestaltung ermöglicht, ist vorgesehen, dass die Rastnase durch Verformung der Rastnase aufgrund ihrer Eigenelastizität von dem Rastanschlag bzw. aus der Aussparung des Rastanschlages bringbar ist.

Weitere Einzelheiten der Erfindung der Beispielsbeschreibung entnehmen.

Das Verriegelungselement für eine Schutzvorrichtung, die im Ausführungsbeispiel als Schutzsieb eines Düngerstreuers ausgebildet ist und in einem Vorratsbehälter dieses Düngerstreuers angeordnet ist, weist die Rastnase und den Handgriff auf. Die Rastnase wirkt mit einem Rastanschlag, der als Aussparung in einem Rahmenteil des Düngerstreuers ausgebildet ist, zusammen. In Verriegelungsstellung des Verriegelungselementes, in dem das Schutzsieb gegenüber dem Rahmen verriegelt ist, fasst die Rastnase in die Aussparung des Rastanschlags. Somit ist das Verriegelungselement zwischen der Schutzeinrichtung und dem Rahmenteil der Maschine angeordnet. Die Rastnase weist die Aussparung auf. In diese Aussparung ist das als stabförmiges Element ausgebildete Betätigungselement einsteckbar. Das Verriegelungselement weist auf seiner der Rastnase abgewandten Seite den Handgriff auf.

Das Verriegelungselement besteht aus einem elastischen Werkstoff. Aufgrund der Elastizität dieses Werkstoffes und der Eigenelastizität des Werkstoffes ist die Rastnase gegenüber dem Rastanschlag durch das Betätigungselement bewegbar, wie nachfolgend beschrieben ist.

Um das Verriegelungselement in Entriegelungsstellung bringen zu können, wird in die Aussparung das stabförmige Element ausgebildete Betätigungselement eingesteckt. Mittels Handkraft wird das Betätigungselement in Richtung des Handgriffes gedrückt, bei Erreichen des Handgriffes kann dann mit der Hand, die das Betätigungselement gedrückt hat, gleichzeitig der Handgriff erfasst werden. Durch Schwenken des Betätigungselementes in Pfeilrichtung wird die Rastnase gegenüber dem Rastanschlag bewegt und aus der Aussparung herausgezogen, wobei die Rastnase aufgrund ihrer Elastizität bei Erreichen der Oberkante der Aussparung nach unten gedrückt wird, so dass dann durch Weiterbewegen des Betätigungselementes die Rastnase aus der Aussparung herausgezogen wird. Nachdem die Rastnase aus der Aussparung herausgebracht worden ist, wird mit der Hand, die den Handgriff umfasst und das Betätigungselement des Handgriffes hält, die Schutzeinrichtung in Pfeilrichtung verschwenkt und hierdurch in eine Nichtschutzposition gebracht, so dass ein Zugang zu den bewegbaren Teilen der Maschine, die von der Schutzeinrichtung in deren Schutzposition, abgedeckt worden ist, nach Wegschwenken der Schutzeinrichtung zugänglich ist.

Der Schutz ist nicht darauf beschränkt, dass die Rastnase an der Schutzeinrichtung und der Rastanschlag an Rahmenteilen angeordnet ist, sondern vielmehr ist es auch möglich, dass die Rastnase an den Rahmenteilen und der Rastanschlag an der Schutzeinrichtung angeordnet ist.

## Patentansprüche

1. Landwirtschaftliche Maschine mit einer Schutzeinrichtung, die den Zugang zu bewegbaren Teilen der landwirtschaftlichen Maschine verhindert und einem Verriegelungselement, wobei das Verriegelungselement mittels eines Betätigungselementes in eine Entriegelungsstellung bringbar ist, wobei das Verriegelungselement zwischen der Schutzeinrichtung und Rahmenteile der Maschine angeordnet ist und eine mit einem Rastanschlag zusammenwirkende Einrastnase aufweist, wobei die Rastnase eine Aussparung aufweist, in welche das Betätigungselement einsteckbar ist, wobei die Rastnase mittels des eingestreckten Betätigungselementes von dem Rastanschlag in Entriegelungsstellung bewegbar ist, so dass die Schutzeinrichtung mit dem eingestreckten Betätigungselement aus ihrer Schutzposition bringbar ist.

2. Landwirtschaftliche Maschine nach Anspruch 1, **dadurch gekennzeichnet, dass** das Verriegelungselement aus einem elastischen Werkstoff besteht und aufgrund der Eigenelastizität des Werkstoffes die Rastnase gegenüber dem Rastanschlag durch das Betätigungselement bewegbar ist.

3. Landwirtschaftliche Maschine nach einem oder mehreren der vorstehenden Ansprüche, **dadurch gekennzeichnet, dass** der Rastanschlag eine Aussparung aufweist, in welche die Rastnase hineinragt.

4. Landwirtschaftliche Maschine nach einem oder mehreren der vorstehenden Ansprüche, **dadurch gekennzeichnet, dass** das Verriegelungselement einen Handgriff aufweist, dass die Rastnase an dem Handgriff angeordnet ist.

5. Landwirtschaftliche Maschine nach einem oder mehreren der vorstehenden Ansprüche, **dadurch gekennzeichnet, dass** die Aussparung für das Betätigungselement derart angeordnet ist, dass das Betätigungselement in Entriegelungsstellung der Rastnase sich im Bereich des Handgriffes und in Verriegelungsstellung der Randnase sich dass das Betätigungselement im Abstand zu dem Handgriff befindet.

6. Landwirtschaftliche Maschine nach einem oder mehreren der vorstehenden Ansprüche, **dadurch gekennzeichnet, dass** die Rastnase durch Verformung der Rastnase aufgrund ihrer Eigenelastizität von dem Rastanschlag bzw. aus der Aussparung des Rastanschlages bringbar ist.

7. Landwirtschaftliche Maschine nach einem oder mehreren der vorstehenden Ansprüche, **dadurch gekennzeichnet, dass** die Rastnase gegenüber dem Handgriff federnd angeordnet ist.

8. Landwirtschaftliche Maschine nach Anspruch 1, **dadurch gekennzeichnet, dass** die Rastnase an der Schutzeinrichtung und der Rastanschlag an den Rahmenteilen angeordnet ist.

9. Landwirtschaftliche Maschine nach Anspruch 1, **dadurch gekennzeichnet, dass** die Rastnase an den Rahmenteilen und der Rastanschlag an der Schutzeinrichtung angeordnet ist.

## Claims

1. Agricultural machine having a protective device, which prevents access to movable parts of a machine, and a locking element, the locking element being capable of being brought into an unlocking position by means of an actuating element, the locking element being arranged between the protective device and parts of the frame of the machine and exhibiting a latching-in lug interacting with a latching stop, the latching lug exhibiting a recess, into which the actuating element is capable of being inserted, the latching lug being capable of displacement by means of the inserted actuating element from the latching stop into the unlocking position, so that the protective device with the inserted actuating element is capable of being brought from its protective position.

2. Agricultural machine according to Claim 1, **characterized in that** the locking element consists of an elastic material and the latching lug is capable of being moved by the actuating element in relation to the latching stop because of the inherent elasticity of the material.

3. Agricultural machine according to one or more of the preceding claims, **characterized in that** the latching stop exhibits a recess, into which the latching lug extends.

4. Agricultural machine according to one or more of the preceding claims, **characterized in that** the locking element exhibits a handle, and **in that** the latching lug is arranged on the handle.

5. Agricultural machine according to one or more of the preceding claims, **characterized in that** the recess for the actuating element is arranged in such a way that the actuating element is present in the area of the handle in the unlocking position of the latching lug and the actuating element is present at a distance from the handle in the locking position of the latching lug.

6. Agricultural machine according to one or more of the preceding claims, **characterized in that** the latching lug is capable, by deformation of the latching lug because of its inherent elasticity, of being brought from the latching stop and out of the recess of the latching stop.

7. Agricultural machine according to one or more of the preceding claims, **characterized in that** the latching lug is resiliently arranged in relation to the handle.

8. Agricultural machine according to Claim 1, **characterized in that** the latching lug is arranged on the protective device and the latching stop is arranged on the parts of the frame.

9. Agricultural machine according to Claim 1, **characterized in that** the latching lug is arranged on the parts of the frame and the latching stop is arranged on the protective device.

## Revendications

1. Machine agricole comportant une installation de protection interdisant l'accès à des pièces mobiles de la machine agricole, ainsi qu'un élément de verrouillage,
l'élément de verrouillage pouvant être mis dans une position déverrouillée par un élément de manoeuvre,
l'élément de verrouillage prévu entre l'installation de protection et les parties du châssis de la machine, comportant un bec d'enclipage coopérant avec une butée d'enclipage,
le bec d'enclipage comportant une cavité recevant l'élément de manoeuvre,
le bec d'enclipage pouvant être déplacé par l'élément de manoeuvre, engagé de la butée d'enclipage vers la position de déverrouillage, de façon que l'installation de protection avec l'élément de manoeuvre engagé, puisse être dégagée de sa position de protection.

2. Machine agricole selon la revendication 1,
**caractérisée en ce que**
l'élément de verrouillage est en un matériau élastique, et le bec d'enclipage peut être déplacé par rapport à la butée d'enclipage par l'élément de manoeuvre en utilisant l'élasticité propre du matériau de l'élément de verrouillage.

3. Machine agricole selon l'une des revendications précédentes,
**caractérisée en ce que**
la butée d'enclipage comporte un dégagement dans lequel pénètre le bec d'enclipage.

4. Machine agricole selon l'une des revendications précédentes,
**caractérisée en ce que**
l'élément de verrouillage comporte une poignée et le bec d'enclipage est prévu sur la poignée.

5. Machine agricole selon l'une des revendications précédentes,
**caractérisée en ce que**
le dégagement de l'élément de manoeuvre est installé de façon qu'en position déverrouillée du bec d'enclipage, l'élément de manoeuvre se trouve dans la zone de la poignée et qu'en position verrouillée du bec d'enclipage, l'élément de manoeuvre se trouve écarté de la poignée.

6. Machine agricole selon l'une des revendications précédentes,
**caractérisée en ce que**
le bec d'enclipage se dégage de la butée d'enclipage ou du dégagement de la butée d'enclipage par déformation du bec d'enclipage sous l'effet de son élasticité propre.

7. Machine agricole selon l'une des revendications précédentes,
**caractérisée en ce que**
le bec d'enclipage est monté de manière élastique par rapport à la poignée.

8. Machine agricole selon la revendication 1,
**caractérisée en ce que**
le bec d'enclipage est prévu sur l'installation de protection et la butée d'enclipage est prévue sur les parties de châssis.

9. Machine agricole selon la revendication 1,
**caractérisée en ce que**
le bec d'enclipage est prévu sur les parties de châssis et la butée d'enclipage sur l'installation de protection.
